# EUROPÄISCHE PATENTSCHRIFT

(11) **EP 0 506 691 B1**
(45) Veröffentlichungstag und Bekanntmachung des Hinweises auf die Patenterteilung: **14.09.1994**
(21) Anmeldenummer: 91900176.8
(22) Anmeldetag: 12.12.1990
(51) Int. Cl.: F04D 25/08, F23L 5/02, F23N 3/08, H02K 9/14

(54) **BRENNER FÜR EINE KRAFTFAHRZEUG-STANDHEIZUNG**
BURNER FOR MOTOR VEHICLE HEATER
BRULEUR POUR CHAUFFAGE AUXILIAIRE DE VEHICULE AUTOMOBILE

(30) Priorität: 22.12.1989 DE 3942647
(43) Veröffentlichungstag der Anmeldung: 07.10.1992
(73) Patentinhaber: Firma J. Eberspächer, 73730 Esslingen (DE)
(72) Erfinder: MOHRING, Fritz, D-7302 Ostfildern 2 (DE)
(86) Internationale Anmeldenummer: DE9000957
(87) Internationale Veröffentlichungsnummer: WO9110068

(56) Entgegenhaltungen:
- DE-A- 2 931 936
- FR-A- 2 302 426
- FR-A- 2 373 696
- US-A- 1 601 531

## Beschreibung

Die Erfindung betrifft einen Brenner für z.B. eine Standheizung für ein Kraftfahrzeug, mit einem Verbrennungsluftgebläse, das von einem Elektromotor angetrieben wird, und mit einer einen elektrischen Widerstand enthaltenden Einrichtung für Teillastbetrieb.

Standheizungen für Kraftfahrzeuge und andere mobile Einheiten sind in verschiedenen Ausführungsformen bekannt, wobei man beispielsweise grundsätzlich unterscheidet zwischen Standheizungen mit Luft als Wärmeträger und Standheizungen mit Wasser als Wärmeträger. Eine weitere Unterscheidung betrifft die Art des Brenners. Praktisch sämtliche Brennertypen besitzen ein Verbrennungsluftgebläse.

Zum Regeln der durch den Betrieb der Standheizung gelieferten Wärmemenge kann man den Brenner in bestimmten Zeitabständen ein- und ausschalten. Ist die geforderte Heizleistung nur relativ gering, so ist es aus wirtschaftlichen Gründen und aus Gründen des Umweltschutzes günstiger, den Brenner nur im Teillastbetrieb zu betreiben. Hierzu ist überlicherweise ein Vorschaltwiderstand vorgesehen, der in den Stromkreis des Elektromotors einschaltbar ist, so daß sich der Elektromotor und damit das Gebläserad nur mit verminderter Drehzahl dreht.

Bislang war es üblich, diesen Widerstand für den Teillastbetrieb in den Zuleitungen zu dem Elektromotor außerhalb des Gehäuses der Anlage anzubringen. Dort war der Widerstand abträglichen Umgebungseinflüssen (Wasser, Schmutz) und sogar der Gefahr einer möglichen mechanischen Beschädigung ausgesetzt. Deshalb mußte dieser Widerstand abgeschirmt werden.

Auch bei einer Standheizung für nur relativ geringe Heizleistung nimmt der Elektromotor eine beträchtliche elektrische Leistung auf. Im Teillastbetrieb muß dann die Differenz zwischen voller Leistung und Teilleistung des Elektromotors von dem elektrischen Widerstand in Wärme umgesetzt werden. Deshalb verwendete man üblicherweise einen relativ großen Widerstand mit großer Oberfläche, damit die anfallende Wärme rasch abgeführt wurde.

Speziell ist es in Verbindung mit Flüssigbrennstoff-Heizvorrichtungen, insbesondere Fahrzeug-Zusatzheizungen, bekannt, den ein Gebläserad drehenden Elektromotor mit Hilfe eines Vorschaltwiderstandes wahlweise im Vollastbetrieb und im Teillastbetrieb zu betreiben. In der DE 29 31 936 A1 findet sich der spezielle Vorschlag, als Vorschaltwiderstand die für den Zündvorgang vorgesehene Glühkerze zu verwenden, die in der Wand des Brennergehäuses angeordnet ist. Die dem Brenner nachgeschaltete Glühkerze ist dabei in dem mehrwandigen Gehäuse so angeordnet, daß sich ein Teil der Glühkerze im Heizluftstrom befindet, ein weiterer Teil der Glühkerze im Abgasstrom liegt und die Spitze der Glühkerze in den Brennerraum hineinragt.

Der vorbekannten FR-PS 2 302 426 läßt sich entnehmen, bei einem elektrischen Gebläseantrieb einen zur Drehzahlregelung eines Elektromotors dienenden elektrischen Widerstand in einem gemeinsamen Gehäuse mit dem antreibenden Elektromotor und im Luftstrom eines Kühlgebläses anzuordnen. Eine solche Anordnung ist aufwendig und bei einer Fahrzeug-Zusatzheizung nicht verwendbar.

Aufgabe der Erfindung ist es, einen Brenner für eine Kraftfahrzeug-Standheizung oder dergleichen zu schaffen, bei dem der elektrische Widerstand für den Teillastbetrieb geschützt angeordnet ist und baulich klein dimensioniert sein kann.

Gelöst wird diese Aufgabe erfindungsgemäß dadurch, daß der Widerstand im Verbrennungsluftstrom angeordnet ist, daß ferner der Elektromotor in einem etwa zylindrischen Gehäuse etwa mittig angeordnet ist und in dem zylindrischen Gehäuse eine den Elektromotor radial umgebende Leiterplatte montiert ist, in der in Form eines Plattenausschnittes eine Verbrennungsluft-Durchlaßöffnung gebildet ist und der elektrische Widerstand auf der stromabwärts gelegenen Seite der Durchlaßöffnung angebracht ist.

Durch die Unterbringung in einem Gehäuse ist der Widerstand geschützt, und da er von dem Verbrennungsluftstrom gekühlt wird, kann er baulich als kleine Einheit ausgebildet sein, da die Verbrennungsluft eine ausreichende Kühlung der Oberfläche des Widerstandselements gewährleistet. Besonders vorteilhaft ist es, daß der Luftstrom der Verbrennungsluft stets dann zur Verfügung steht, wenn in dem elektrischen Widerstand elektrische Energie in Wärmeenergie umgesetzt wird. Nach dem Ausschalten des Gebläses braucht der elektrische Widerstand nicht gekühlt zu werden.

Die Verbrennungsluft sorgt außerdem für eine Kühlung des gesamten Elektromotors und speziell für eine Kühlung des Teillast-Widerstandes. Diese Maßnahmen haben darüber hinaus die günstige Wirkung einer gewissen Vorwärmung der Verbrennungsluft, bevor die Verbrennungsluft in die dem Gebläserad nachgeordnete Brennkammer einströmt.

Durch die besonders günstige Anbringung des elektrischen Widerstands wird erreicht, daß die durch die Verbrennungsluft-Durchlaßöffnung strömende Luft direkt auf eine Seite des Widerstands trifft. Dieser hat überlicherweise eine etwa zylindrische Form und ist so angebracht, daß eine Hälfte des Zylindermantels von der Verbrennungsluft angeströmt wird. Die Luft strömt an der Mantelfläche des Widerstandselements vorbei, wobei das Widerstandselement intensiv gekühlt wird. Um eine gleichmäßige Kühlung zu erreichen, wird der Widerstand vorzugsweise tangential bezüglich des zylindrischen Gehäuses angeordnet.

Vorzugsweise ist der Elektromotor in einem etwa zylindrischen Gehäuse angeordnet, wobei die Längsachse bzw. Motorwelle des Elektromotors etwa mit der Längsachse des zylindrischen Gehäuses zusammenfällt. Bei einer solchen geometrischen Anordnung läßt sich der Strömungsweg der Verbrennungsluft gut um den üblicherweise ein zylindrisches Gehäuse aufweisenden Elektromotor herumführen.

Speziell sieht die Erfindung vor, daß in dem zylindrischen Gehäuse durch zumindest teilweise mit Öffnungen versehene, vorzugsweise schalldämpfende, radial verlaufende Trennwände mehrere Ringkammern gebildet sind, durch die von einem Verbrennungslufteinlaß aus Verbrennungsluft zu einem Gebläserad strömt. Die Öffnungen in den Trennwänden sind über den Umfang gegeneinander versetzt. Dadurch wird eine mehrmalige Umlenkung der das Gehäuse durchströmenden Verbrennungsluft erreicht. Z.B. kann der Verbrennungslufteinlaß an einem stirnseitigen Ende des zylindrischen Gehäuses vorgesehen sein, so daß die Verbrennungsluft dann - vorzugsweise tangential - in eine erste Ringkammer einströmt. An einer dem Verbrennungslufteinlaß abgewandten Seite der Ringkammer befindet sich dann eine (axiale) Öffnung, durch die Verbrennungsluft in eine anschließende Ringkammer gelangt. Aus dieser gelangt die Verbrennungsluft dann über eine weitere Öffnung, die sich wiederum auf der anderen Seite der Gehäuse befindet, in eine nachgeschaltete Ringkammer. Durch das häufige axiale, radiale und umfangsmäßige Umlenken der Verbrennungsluft wird der Elektromotor intensiv gekühlt.

Man könnte das Widerstandselement auch stromaufwärts bezüglich des Plattenausschnitts in der Leiterplatte anordnen, jedoch ist die Kühlungswirkung dann nicht so günstig. Auf der Leiterplatte sind in an sich bekannter Weise elektrisch leitende Bahnen ausgebildet und der Widerstand ist mit seinen beiden Anschlußdrähten an zwei Leiterbahnen angelötet. Über die Leiterbahnen erfolgt dann der Anschluß an die elektrische Anlage des Geräts.

Um einen weitestgehend geräuscharmen Betrieb der Standheizung zu erreichen, ist vorzugsweise an der den Widerstand tragenden Seite der Leiterplatte eine Schalldämmplatte angebracht, die einen Ausschnitt besitzt, der sich im wesentlichen mit der Verbrennungsluft-Durchlaßöffnung der Leiterplatte deckt. Durch diese Schalldämmplatte und gegebenenfalls weitere mit Abstand voneinander in dem zylindrischen Gehäuse angeordnete Dämmplatten lassen sich Geräusche des Motors, des Gebläserades und der Luftströmung weitestgehend dämpfen.

Im folgenden wird eine Ausführungsform der Erfindung anhand der Zeichnung näher erläutert. Es zeigen:
- Figur 1: eine Längsschnittansicht durch ein Verbrennungsluftgebläse einer Standheizung, und
- Figur 2: eine Schnittansicht entlang der Linie II-II.

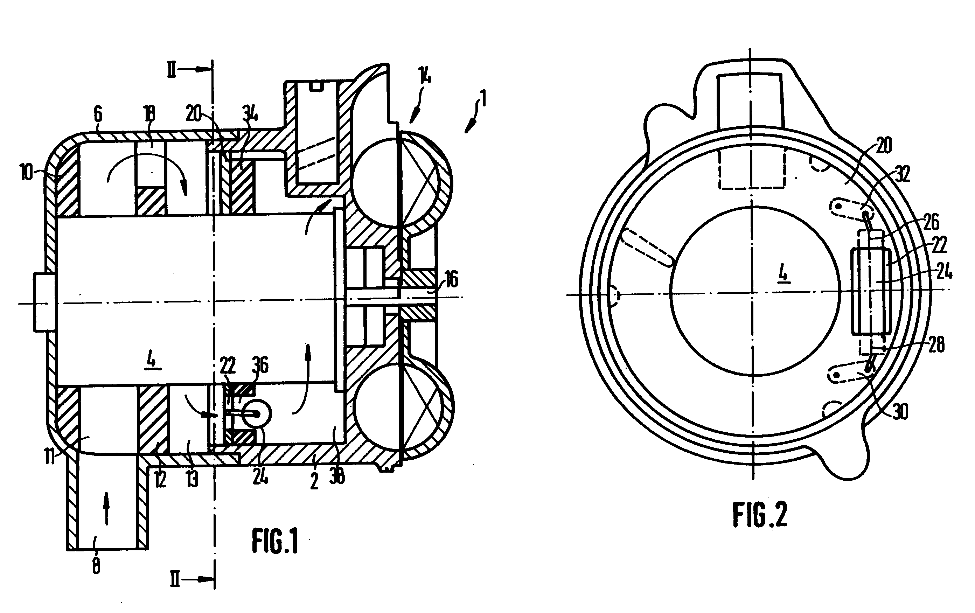

Nach Fig. 1 enthält ein allgemein mit 1 bezeichnetes Verbrennungsluftgebläse ein als Gußteil ausgebildetes Aufnahmegehäuse 2 und eine Gehäusekappe 6, die auf das Aufnahmegehäuse 2 aufgesetzt ist. Die Gehäuseteile 2 und 6 sind zylindrisch ausgebildet, wie aus Fig. 1 und 2 ersichtlich ist. In dem Aufnahmegehäuse 2 ist mittig ein Elektromotor 4 angebracht.

Eine Motorwelle 16 des Elektromotors 4 trägt an ihrem äußeren Ende ein Gebläserad 14, welches mit einem Ringkanal in der Stirnseite des Aufnahmegehäuses 2 zusammenwirkt, um Verbrennungsluft in eine hier nicht dargestellte Brennkammer einzuleiten.

Die Verbrennungsluft gelangt von einem Verbrennungslufteinlaß 8 in der Nähe der linken Stirnseite des Gehäuses in das Gehäuseinnere. Im Inneren des Gehäuses sind mit Abstand voneinander eine erste Isolierlage 10, die am Boden der Gehäusekappe 6 anliegt, und eine zweite Isolierlage 12 montiert, wobei die beiden Isolierlagen 10 und 12 den zylindrischen Elektromotor 4 umfassen und zwischen sich eine erste Ringkammer 11 bilden.

Auf der den Verbrennungsluft-Einlaß 8 abgewandten Seite des Elektromotors 4 ist in der Isolierlage 12 eine Öffnung 18 gebildet, durch die die Verbrennungsluft aus der Ringkammer 11 in eine weitere Ringkummer 13 gelangt.

Die Ringkammer 13 wird auf der rechts in Fig. 1 dargestellten Seite von einer Leiterplatte 20 begrenzt, die ringförmig ausgebildet ist und sich zwischen dem Elektromotor 4 und dem Inneren des Aufnahmegehäuses 2 erstreckt. Auf die der Ringkammer 13 abgewandten Seite der Leiterplatte 20 ist eine Dämmplatte 34 geklebt, an die sich - rechts in Fig. 1 - eine dritte Ringkammer 38 anschließt.

Die Verbrennungsluft läuft gemäß Pfeilrichtung durch die Ringkammern 11, 13 und 38 und tritt rechts oben in Fig. 1 aus dem Gebläse aus. Die Leiterplatte 20 ist eine in der Elektrotechnik übliche Leiterplatte aus einem nicht-leitenden Isolierstoff und einem Muster von elektrischen Leiterbahnen.

Auf der der Öffnung 18 der Isolierlage 12 gegenüberliegenden Seite bezüglich des Elektromotors 4 ist in der Leiterplatte 20 ein Plattenausschnitt 22 gebildet, der eine Verbrennungsluft-Durchlaßöffnung bildet. Eine entsprechende Durchlaßöffnung ist als Ausschnitt 36 in der Dämmplatte 34 gebildet. Wie durch die Strömungspfeile ersichtlich, befindet sich stromabwärts bezüglich des Plattenausschnitts 22 ein elektrischer Widerstand 24, bei dem es sich um den Vorschaltwiderstand für den Teillastbetrieb des Brenners handelt. Da es hier hauptsächlich um die mechanische Anordnung des Widerstands 24 geht, soll auf die elektrische Verschaltung nicht eingegangen werden.

Wie aus der Zusammenschau der Fig. 1 und 2 ersichtlich ist, ist der eine zylindrische Form aufweisende Widerstand 24 etwa symmetrisch zu dem rechteckigen Plattenausschnitt 22 der Leiterplatte 20 angeordnet, wobei die Anschlußdrähte 26 und 28 des Widerstands 24 mit Leiterbahnen 30 und 32 auf der Leiterplatte 20 durch Löten verbunden sind.

Wie in Fig. 1 erkennbar ist, befindet sich die Mittellängsachse des Widerstands 24 etwa in der Ebene der freiliegenden Oberfläche der Dämmplatte 34. Dadurch strömt die in Fig. 1 von links kommende Verbrennungsluft durch die Öffnung 22 und 36, wobei aufgrund der Querschnittsverengung im Bereich der Oberfläche des Widerstands eine zwangsweise enge Vorbeiführung der Strömungsluft an der Oberfläche des Widerstands erreicht wird.

Die Erfindung ist nicht auf das oben beschriebene Ausführungsbeispiel beschränkt. Der elektrische Widerstand kann auch an einer anderen Stelle in dem Verbrennungsluftgehäuse angeordnet werden, er kann radial bezüglich des Gehäuses angeordnet werden. Ferner ist es möglich, mehrere Einzelwiderstände an verschiedenen Stellen des Weges der Verbrennungsluftströmung anzuordnen, wobei diese Mehrzahl von einzelnen Widerstandselementen dann elektrisch einen Teillastwiderstand bilden.

## Patentansprüche

1. Brenner für z.B. eine Standheizung für ein Kraftfahrzeug, mit einem Verbrennungsluftgebläse (1), das von einem Elektromotor (4) angetrieben wird, und mit einer Einrichtung für Teillastbetrieb, welche einen elektrischen Widerstand (24) im Luftstrom innerhalb eines Gehäuses (2, 6) aufweist,
dadurch gekennzeichnet, daß
a) der Widerstand (24) im Verbrennungsluftstrom angeordnet ist,
b) der Elektromotor (4) in einem etwa zylindrischen Gehäuse (2, 6) etwa mittig angeordnet ist,
c) in dem zylindrischen Gehäuse (2, 6) eine den Elektromotor (4) radial umgebende Leiterplatte (20) montiert ist, in der in Form eines Plattenausschnitts (22) eine Verbrennungsluft-Durchlaßöffnung (22) gebildet ist, und
d) der elektrische Widerstand (24) auf der stromabwärts gelegenen Seite der Durchlaßöffnung (22) angebracht ist.

2. Brenner nach Anspruch 1, dadurch gekennzeichnet, daß in dem einen Verbrennungslufteinlaß (8) aufweisenden Gehäuse (2, 6) um den Elektromotor (4) herum ein von Verbrennungsluft durchströmter Kühlkanal (11, 18, 13, 22, 36, 38) gebildet ist, an den ein auf
der Motorwelle (16) des Elektromotors (4) befestigtes Gebläse (14) anschließt, und daß der Plattenausschnitt (22) in dem Kühlkanal liegt.

3. Brenner nach Anspruch 1 oder 2, dadurch gekennzeichnet, daß in dem zylindrischen Gehäuse (2, 6) durch zumindest teilweise mit Öffnungen (18, 36) versehene, vorzugsweise schalldämmende, radial verlaufende Trennwände (10, 12, 34) mehrere Ringkammern (11, 13, 38) gebildet sind, durch die von einem Verbrennungslufteinlaß (2) aus Verbrennungsluft zu einem Gebläserad (14) strömt.

4. Brenner nach einem der Ansprüche 1 bis 3, dadurch gekennzeichnet, daß vorzugsweise an der den Widerstand (24) tragenden Seite der Leiterplatte (20) eine Schalldämmplatte (34) angebracht ist, die einen Ausschnitt (36) besitzt, der sich im wesentlichen mit der Verbrennungsluft-Durchlaßöffnung (22) in der Leiterplatte deckt.

## Claims

1. Burner for e.g. an auxiliary heating device for a motor vehicle, having a combustion air fan (1) which is driven by an electric motor (4), and having a means for partial load operation which has an electrical resistor (24) in the air flow within a housing (2, 6),
characterized in that
a) the resistor (24) is arranged in the combustion air flow,
b) the electric motor (4) is arranged approximately centrally in an approximately cylindrical housing (2, 6),
c) there is mounted in the cylindrical housing (2, 6) a conductor plate (20) which radially surrounds the electric motor (4) and in which a combustion air passage opening (22) in the form of a plate cutout (22) is formed, and
d) the electrical resistor (24) is mounted on the downstream side of the passage opening (22).

2. Burner according to Claim 1, characterized in that in the housing (2, 6) having a combustion air inlet (8) there is formed around the electric motor (4) a cooling channel (11, 18, 13, 22, 36, 38) through which combustion air flows and to which there is connected a fan (14) secured to the motor shaft (16) of the electric motor (4), and in that the plate cutout (22) is located in the cooling channel.

3. Burner according to Claim 1 or 2, characterized in that there are formed in the cylindrical housing (2, 6) by means of preferably sound-absorbing, radially extending separating walls (10, 12, 34) provided at least partially with openings (18, 36) a plurality of annular chambers (11, 13, 38) through which combustion air flows from a combustion air inlet (2) to a fan wheel (14).

4. Burner according to one of Claims 1 to 3, characterized in that there is mounted preferably on the side of the conductor plate (20) bearing the resistor (24) a sound-absorbing plate (34) which has a cutout (36) which substantially coincides with the combustion air passage opening (22) in the conductor plate.

## Revendications

1. Brûleur, par exemple pour un chauffage auxiliaire d'un véhicule à moteur, comportant a ventilateur pour l'air de combustion (1) qui est entraîné par un moteur électrique (4), et un dispositif pour un fonctionnement en charge partielle qui présente une résistance électrique (24) dans le flux d'air à l'intérieur d'un carter (2, 6),
caractérisé en ce que
a) la résistance (24) est disposée dans le flux d'air de combustion,
b) le moteur électrique (4) est placé approximativement au centre d'un carter cylindrique (2, 6),
c) dans le carter cylindrique (2, 6) est montée une carte de circuits imprimés (20) entourant radialement le moteur électrique (4), dans laquelle est réalisée une ouverture de passage pour l'air de combustion (22) sous la forme d'une découpe (22), et en ce que
d) la résistance électrique (24) est fixée sur le côté de l'ouverture de passage (22) qui est situé en aval.

2. Brûleur selon la revendication 1, caractérisé en ce que dans le carter (2, 6) présentant une entrée de l'air de combustion (8), autour du moteur électrique (4) est formé un canal de refroidissement (11, 18, 13, 22, 36, 38) parcouru par de l'air de combustion, auquel se raccorde un ventilateur (14) fixé à l'arbre moteur (16) du moteur électrique (4), et en ce que la découpe de la carte de circuits imprimés (22) se situe dans le canal de refroidissement.

3. Brûleur selon la revendication 1 ou 2, caractérisé en ce que dans le carter cylindrique (2, 6), des parois de séparation (10, 12, 34) s'étendant radialement, de préférence insonorisantes et munies au moins partiellement d'ouvertures (18, 36) forment plusieurs espaces annulaires (11, 13, 38) qui sont parcourus par de l'air de combustion provenant d'une entrée de l'air de combustion (2) et allant vers une roue de ventilateur (14).

4. Brûleur selon l'une des revendications 1 à 3, caractérisé en ce que, de préférence sur le côté de la carte de circuits imprimés (20) portant la résistance (24) est fixée une plaque d'insonorisation (34) qui comporte une découpe (36) coïncidant pour l'essentiel avec l'ouverture pour le passage de l'air de combustion (22) dans la carte de circuits imprimés.
